Europäisches Patentamt

European Patent Office

Office européen des brevets

(11) Publication number: **0 161 698**
**B1**

# EUROPEAN PATENT SPECIFICATION

(45) Date of publication of patent specification: **26.04.89**

(51) Int. Cl.⁴: **B 09 B 5/00**

(21) Application number: **85200473.8**

(22) Date of filing: **29.03.85**

(54) Method for cleansing and decontaminating soil and the equipment used for this purpose.

(30) Priority: **04.04.84 NL 8401069**

(43) Date of publication of application:
**21.11.85 Bulletin 85/47**

(45) Publication of the grant of the patent:
**26.04.89 Bulletin 89/17**

(84) Designated Contracting States:
**AT BE CH DE FR GB IT LI LU NL SE**

(56) References cited:
BE-A- 894 733
DE-A-2 531 732
DE-A-2 822 774
DE-A-2 911 399
NL-A-8 200 155
NL-A-8 202 593
NL-A-8 203 415
US-A-4 336 136
US-A-4 392 944
DERWENT JAPANESE PATENTS GAZETTE,
Derwent Publications, section Chemical, week
Y30, 5th September 1977, page 10, no. 53368;
& JP - A - 52 072 368 (CHIYODA CHEM. ENG.
CO.) 15-12-1975
"Handboek bodemsaneringstechnieken, part II,
1st July 1983, pages 15-24;

(73) Proprietor: **Wegenbouwmaatschappij J.
Heijmans B.V.**
**Graafsebaan 13**
**NL-5248 JR Rosmalen (NL)**

(72) Inventor: **Jonker C.**
**De Kunning 10**
**NL-5258 KR Berlicum (NL)**

(74) Representative: **Noz, Franciscus Xaverius, Ir.
et al**
**Algemeen Octrooibureau P.O. Box 645**
**NL-5600 AP Eindhoven (NL)**

## Description

The invention refers to a method for the cleansing and decontamination of soil by (a) the extraction of soil contaminated principally by cyanides, hydrocarbons or other organic material, and/or heavy metals, by mixing the contaminated soil with water comprising extractant in a washer provided with stirrer, in which the pH during and after washing is controlled according to the nature of the contaminants, (b) separating the cleansed or at least partially cleansed soil from the water, (c) separating the contaminants from the water and (d) recirculating the water as extractant.

This method is known from the "Handboek Bodemsaneringstechnieken" of 1 July 1983, pp. 17 and 18, where the possibility of cleansing soil by means of extraction with water is given, mixing the ground with water under stirring and dependant on the contaminations caustic soda or an acid is added to the mixture.

In Netherlands Patent Application 8202593 particular attention is paid to the decontamination of soil contaminated with cyanides: the soil is mixed with an aqueous caustic solution to a dilution of 36—50% by volume solids, at a pH of about 11. Alkali hypochlorite is added while stirring vigorously, so that the cyanide is oxidized to cyanate and after this more alkali hypochlorite is added at a pH of 6—7 and a lower solids content, so that the cyanate is disassociated to gaseous carbon dioxide and nitrogen.

Netherlands Patent Application 8100879 describes a method for the removal of undesirable constituents from soil by screening off the contaminated soil from the adjacent uncontaminated soil and then extracting the contaminants in situ from the contaminated soil and draining off the extract so formed and purifying it according to well-known methods. With regard to the extraction method it is stated that the extractant can be introduced on or into the contaminated ground in any suitable manner, for example by spraying and/or by injecting. From experiments, however, it has been found that with this method of extraction of soil, the contaminants are not taken up or are too slowly taken up by the extractant. The extraction method is now one of the improvements to which the method according to the present invention refers.

From Netherlands Patent Application 8200155 a method is known for the cleansing of soil containing contaminated sand by washing the soil on a sieve. In this way more intimate contact between the extractant and the soil containing the sand is obtained because the extractant can then be passed more often through the soil containing the contaminated sand. This method is restricted to soil containing sand because with soil containing clay the sieving operation is more difficult to implement.

From the American Patent Specifications 4,336,136 and 4,392,944 a method is known for the removal of hydrocarbons from soil by washing the soil, whereby a maximum solids content of 50%, preferably 20% by weight, is used.

In German Patent Application 2,911,399 and in Belgian Patent Specification 894,733 attention is paid primarily to the removal of heavy metals from soil, in which complex-forming substances and caustics are introduced in the soil.

Investigations have shown that it is possible to develop a general process for the cleansing and decontamination of cyanide containing soil, which method being characterized by the use of a scrubber as the washer with two or more compartments, each provided with a mechanical stirrer, in which the mixture is processed having a solids content of 60—80% by weight and the cyanides are removed by oxydation in the washer.

The washing equipment or scrubber is preferentially an "attrition scrubber" being well-known in the mining industry (see Mineral, coal, chemical processing equipment, Bulletin No. ASM-1). A characteristic feature of the mixing process in the scrubber is the intensive mutual contact of the soil particles owing to the abrasive rubbing between the particles whereby contaminants on the soil particles are transferred to the water extractant better and faster. Contaminants in the form of particles are also pulverized by the mechanical forces in the scrubber acting on the solid particles, whereby they dissolve more rapidly in the aqueous phase. Because coarse material such as rubble and gravel can have adverse effects on the operation of the scrubber, coarse material is first removed from the soil before it is washed with an alkaline solution and introduced in the scrubber. The solids content in the scrubber is adjusted to 60—80% by weight, preferably to about 70% by weight, so that contaminants are shaken loose from the soil particles and transferred to the aqueous phase. This desorption process takes place particularly favourably at a pH of 11 or higher. If the soil is contaminated only by hydrocarbons, the pH may be set at about the value 9, while in the presence of cyanides and heavy metals it is preferable to use a pH of about 11—12. A higher temperature in the scrubber improves the transfer of contaminants to the water. The rate of cleansing of kerosene-contaminated soil in the scrubber and its dependence on the pH is shown in Table A. The data refer to soil containing 4100 mg of kerosene per kg of dry soil, whereby the quantities of kerosene remaining in the soil after the indicated number of minutes of intensive stirring in the scrubber, for a fixed solids content of 70% by weight, are given in the table, expressed in mg/kg.

### TABLE A

| | Mixing time (minutes) | | |
|---|---|---|---|
| pH | 3 | 10 | 30 |
| 7 | 1800 | 650 | 260 |
| 9 | 390 | 270 | 255 |
| 11 | 290 | 250 | 210 |

The optimum conditions in the scrubber can be ascertained as functions of the contaminants present and the further processing of the materials.

In the presence of in the soil of cyanides and heavy metals it has been found that a pH value of 11—12 in the scrubber is preferable in order to transfer the maximum amount of contaminants from the soil to the aqueous phase. At lower pH undesirable substances could be formed from the cyanides.

The heavy metals can be removed together with the cyanides because the heavy metals dissolve as complexes or as compounds. The rates of removal from the soil of the metals zinc, chromium, nickel and copper, in the scrubber, at a pH of 11.5 are given in Table B, expressed in mg per kg of dry material.

### TABLE B

| Time (minutes) | Zn | Cr | Ni | Cu |
|---|---|---|---|---|
| 0 | 1500 | 320 | 43 | 140 |
| 3 | 920 | 130 | 24 | 20 |
| 10 | 320 | 136 | 12 | 8.4 |
| 30 | 220 | 82 | 8.5 | 7.1 |

Experiments have been made which show how rapidly cyanide contaminants are transferred to the aqueous extractant in the scrubber. These experiments refer to soil contaminated by electroplating waste, containing 930 mg of cyanide compounds per kg of dry soil. After extraction at a pH of 11.5 and with a solids content of 70%, it was found that 10 minutes of washing in the scrubber reduced the cyanide content of the soil to 42 mg per kg of soil. After intensive washing in the scrubber, the mixture of partially cleansed soil and liquid (water), into which the greater part of the contaminants have been transferred, is fed to a pump tank in which it is diluted with recirculation water to make a suspension suitable for further processing, having a solids content of preferably 30%. After this the cyanide, present in ionic form in the water, is oxidized to cyanate by the addition of an oxidant, whereby the pH is maintained at 11—12. Hypochlorite or hydrogen peroxide is used as oxidant. In the neutralization tank which follows, the pH is reduced to 7 or less, whereby the cyanate is dissociated to nitrogen and carbon dioxide. The results obtained after oxidation of the contaminated soil by NaOCl or by $H_2O_2$, which before scrubbing contained 930 mg of CN per kg of soil and after washing for 10 minutes in the scrubber still contained 42 mg of CN per kg of soil, are summarized in Table C. The table shows that after an hour of oxidation with NaOCl the soil contained 0.08 mg of CN per kg of soil and after an hour of oxidation with $H_2O_2$ less than 0.05 mg of CN per kg of soil.

### TABLE C

| Oxidant | Time (minutes) | | | |
|---|---|---|---|---|
| | 0 | 15 | 30 | 60 |
| NaOCl | 42 | 6.9 | 3.1 | 0.08 |
| $H_2O_2$ | 42 | 0.78 | 0.42 | <0.05 |

It is also possible to carry out the oxidation earlier, in the scrubber; in this case the oxidation of the cyanide is done at a higher solids content than when the soil-water mixture is first further diluted in a reaction vessel. If there are organic compound contaminants present together with the cyanide, the use of hypochlorite can lead to the formation of organo-chlorine compounds; hydrogen peroxide is then to be preferred as oxidant. In practice a molar excess of oxidant, with respect to the cyanide, will be used, whereby the preferred excess will be 5:1 with respect to the stoichiometric ratio of oxidant:cyanide. The results obtained under these conditions show that for soil containing 930 mg of CN per kg, when oxidation takes place in the scrubber for 10 minutes with an excess of oxidant of 5:1 with respect to the stoichiometric quantity and at a pH of 11.5, the CN contamination remaining in the ground was less than 0.05 mg per kg of soil, whereby it should be noted that the detection limit for CN was 0.05 mg/kg. The cyanate ion is then further oxidized in the pump tank to $CO_2$ and $N_2$.

In the next stage the soil is separated out from the suspension according to well-known methods and finally the aqueous phase is purified according to well-known techniques, this last falling outside the scope of the present patent application.

The equipment for the implementation of the method, which comprises, amongst other things, a scrubber, pump tank, separator, buffer vessel, mixing vessel, second separator and flotation tank, should preferably be constructed in such a way as to be transportable in order that it can be set up to work at any desired location. For this purpose the equipment is arranged and assembled in such a way that it can be built into trasnportable containers. In itself it is known from Netherlands Patent Application 8200155 that such equipment or plant should be trasnportable but it is not stated there that the equipment should be built into containers for this purpose.

## Claims

1. Method for the cleansing and decontamination of soil by (a) the extraction of soil contaminated principally by cyanides, hydrocarbons or other organic material, and/or heavy metals, by (a) mixing the contaminated soil with water comprising extractant in a washer provided with stirrer, in which the pH during and after washing is controlled according to the nature of the contaminants, (b) separating the cleansed or at least partially cleansed soil from the water, (c) separating the contaminants from the water and (d) recirculating the water as extractant, characterized by the use of a scrubber as the washer with two or more compartments, each provided with a mechanical stirrer, in which the mixture is processed having a solids content of 60—80% by weight and the cyanides are removed by oxydation in the washer.

2. Method as in Claim 1, characterized by the use of an "attrition scrubber" as the scrubber.

## Patentansprüche

1. Verfahren zum Reinigen und Dekontaminieren von Erde durch

(a) Extrahieren der hauptsächlich durch Cyanide, Kohlenwasserstoffe oder ein anderes organisches Material und/oder Schwermetalle kontaminierten Erde durch Mischen der kontaminierten Erde mit Wasser als Extraktionsmittel in einem mit einem Rührer ausgestatteten Wäscher, in dem der pH-Wert während und nach dem Waschen je nach Art der Kontaminanten eingestellt wird,

(b) Abtrennen der gereinigten oder mindestens teilweise gereinigten Erde von dem Wasser,

(c) Abtrennen der Kontaminanten von dem Wasser und

(d) Rezirkulieren des Wassers als Extraktionsmittel, gekennzeichnet durch die Verwendung eines Skrubbers als Wäscher mit zwei oder mehr Abteilen, von denen jedes mit einem mechanischen Rührer ausgestattet ist, in dem die Mischung mit einem Feststoffgehalt von 60 bis 80 Gew.-% behandelt wird und die Cyanide durch Oxidation in dem Wäscher entfernt werden.

2. Verfahren nach Anspruch 1, gekennzeichnet durch die Verwendung eines "Attritions-Skrubbers" als Skrubber.

## Revendications

1. Méthode pour ne nettoyage et le décontamination du sol par extraction de sol principalement contaminé par des cyanures, des hydrocarbures ou une autre matière organique et/ou des métaux lourds, comprenant (a) le mélange du sol contaminé avec un agent d'extraction comprenant de l'eau dans une unité de lavage équipée d'un agitateur, dans laquelle le pH pendant et après le lavage est contrôlé en fonction de la nature des contaminants, (b) la séparation du sol nettoyé ou au moins partiellement nettoyé de l'eau, (c) la séparation des contaminants de l'eau et (d) la recirculation de l'eau en tant qu'agent d'extraction, caractérisée en ce que l'unité de lavage utilisée est un scrubber avec deux ou plusieurs compartiments ayant chacun d'un agitateur mécanique, où le mélange traité a une teneur en solides de 60 à 80% en poids et que les cyanures sont éliminés par oxydation dans l'unité de lavage.

2. Méthode suivant la revendication 1, caractérisée en ce que le scrubber utilisé est un "scrubber à attrition".